# EUROPÄISCHE PATENTSCHRIFT

(11) **EP 1 624 036 B1**
(45) Veröffentlichungstag und Bekanntmachung des Hinweises auf die Patenterteilung: **02.04.2008**
(21) Anmeldenummer: 05009280.8
(22) Anmeldetag: 28.04.2005
(51) Int. Cl.: C09D 13/00

(54) **Radierbare Farbmine**
Erasable coloured lead
Mine de couleur effacable

(30) Priorität: 23.07.2004 DE 202004011610 U; 14.08.2004 DE 202004012747 U
(43) Veröffentlichungstag der Anmeldung: 08.02.2006
(73) Patentinhaber: Faber-Castell AG, 90546 Stein (DE)
(72) Erfinder: Krasnikov, Nikolaj, 90513 Zirndorf (DE); Lugert, Gerhard Dr., 90431 Nürnberg (DE)
(74) Vertreter: Mörtel & Höfner

(56) Entgegenhaltungen:
- EP-A- 1 258 235
- EP-A- 1 291 399
- US-A1- 2003 100 629

## Beschreibung

Um eine Radierbarkeit zu erreichen, sind bei herkömmlichen Farbminen, die Bestandteile von holz- oder kunststoffgefassten Farbstiften sind oder auch ohne Umhüllung als Kreiden verwendet werden, vielfach hohe Anteile an Kunststoffpartikeln etwa aus PTFE, LDPE oder PP beigemengt, wie beispielsweise in EP 1093495 B1 beschrieben. Die Kunststoffpartikel, die mit der jeweiligen Minenfarbe eingefärbt sind, haften derart an Papieroberflächen, dass sie mit einem Radiergummi wieder entfernbar sind. Neben der komplizierten Herstellungsweise ist bei den bekannten Minen nachteilig, dass sie ein bremsendes, ungleichmäßiges und unangenehmes Applikationsverhalten auf Papier zeigen.

Aufgabe der Erfindung ist es, eine Farbmine mit hoher Farbintensität, verbessertem Abstrichverhalten und guter Radierbarkeit vorzuschlagen.

Diese Aufgabe wird durch eine Farbmine nach Anspruch 1 gelöst. Danach sind neben Alginat als Bindemittel ein oder mehrere Triglyceride einer oder mehrerer Fettsäuren mit 10 bis 20 C-Atomen vorhanden. Überraschenderweise hat es sich gezeigt, dass die Kombination dieser Triglyceride, insbesondere solcher mit einem Schmelzpunkt zwischen 30°C und 70°C zusammen mit Alginaten als Bindemittel Minen ermöglicht, die alle gewünschten Eigenschaften in sich vereinen. Alginate als Bindemittel haften weniger stark an Papieroberflächen als etwa Cellulosederivate, woraus sich eine leichtere Radierbarkeit ergibt, vor allen Dingen in Kombination mit den Feststoffpartikeln eines beigemengten Füllstoffs. Als besonders geeignet haben sich Natriumalginat und Kaliumalginat entweder einzeln oder in Mischung erwiesen. Die besten Ergebnisse hinsichtlich Abstrichverhalten und Radierbarkeit werden erzielt, wenn der Minenmasse Triglyceride aus der Gruppe Palmöl-Triglyceride, Palmkernöl-Triglyceride, Capryl-Triglyceride, Caprin-Triglyceride, Capryl-/Caprin-Triglyceride beigemengt werden.

Als Füllstoffe eignen sich allgemein solche auf anorganischer Basis am besten. Besonders vorteilhaft im Hinblick auf die Radierbarkeit ist Glimmer (Mica) mit einer plättchenförmigen Struktur, etwa Muskovit und Biotit oder aber auch eine Mischung aus Glimmer mit Kaolin oder Glimmer mit Talkum. Zur Einfärbung werden Farbpigmente verwendet, da diese kaum am Untergrund, insbesondere an Papier haften oder gar in dessen Faserstruktur eindringen, wie dies bei löslichen Farbstoffen der Fall wäre.

Als Basisrezeptur kann für die erfindungsgemäßen Minen folgende Zusammensetzung angegeben werden:

| | | | |
|---|---|---|---|
| Bindemittel: Alginat | 1 bis 10 % | | |
| Füllstoffe: | 30 bis 90 % | | |
| Pigmente: | 0,1 bis 15 % | | |
| Triglyceride: | 5 bis 25 % | | |
| Additive: | 0 bis 10 % | | |

Als Additive kommen übliche Zusätze wie beispielsweise Tenside und Gleitmittel in Betracht. So kann etwa eine geringe Menge Calciumstearat oder Natriumstearat als Hilfsgleitmittel zugesetzt werden, wobei bei Zugabe von Calciumstearat eine wasserfeste Einstellung der Mine erreicht wird, wohingegen auch schon bei geringen Mengen Natriumstearat eine zumindest Teil-Aquarellierbarkeit der Farbminenabstriche erzielt werden kann.

Die Herstellung der gewünschten Minen oder Kreiden erfolgt durch Homogenisieren der pulverförmigen Materialien in Schnellmischern oder Knetern unter Wasserzugabe. Das erhaltene Granulat oder auch pastenförmige Material wird mittels Pressen zu Kreiden oder Minen extrudiert und anschließend bei Temperaturen zwischen 60°C bis maximal 120°C getrocknet.

### Beispiel 1:

Als Beispiel für eine gelbe Kreide (Kreidendurchmesser 1 cm) kann angegeben werden:

| | | |
|---|---|---|
| Kaliumalginat: | 2,0 % | |
| Mica: | 40 % | |
| Talkum: | 38 % | |
| Calciumstearat: | 4,0 % | |
| Glyceride aus gesättigten C12- bis C18-Fettsäuren (CAS 9334-20-4 + CAS 91744-66-0): | 14,0 % | |
| Pigment Yellow 1; CI 11680 | 2,0 % | |

Erhalten wird eine wasserfeste Kreide, deren Abstriche eine gute Radierbarkeit aufzeigen.

### Beispiel 2:

Radierbare rote Farbstiftmine (Minendurchmesser 3,0 mm):

| | | |
|---|---|---|
| Natriumalginat: | 6,0 % | |
| Glimmer: | 20,0 % | |
| Kaolin: | 28,0 % | |
| Glyceride aus gesättigten C12-C18-Fettsäuren (CAS 9334-20-4 + 91744-66-0): | 12,0 % | |
| Pigment Red 112, CI 12370: | 4,0 % | |

### Beispiel 3:

Rotbraune, radierbare Farbstiftmine (Minendurchmesser 4,0 mm):

| | | |
|---|---|---|
| Natriumalginat: | 5,0 % | |
| Mica: | 20,0 % | |
| Talkum: | 10,0 % | |
| Kaolin: | 40,0 % | |
| Caprylic-/Caprictriglyerid: | 12,0 % | |
| Stearinsäure: | 2,0 % | |
| Pigment Red-110 (CAS-Nr. 1309-37-1) | 11,0 % | |

## Patentansprüche

1. Radierbare Farbmine, die aus 1 % bis 10 % eines Alginats als Bindemittel, 5 % bis 25 % wenigstens eines Triglycerids einer oder mehrerer Fettsäuren mit 10 bis 20 C-Atomen, sowie 30 % bis 90 % Füllstoffen, 0,1 % bis 15 % Farbpigmenten und 0 % bis 10 % Additiven besteht.

2. Farbmine nach Anspruch 1,
**dadurch gekennzeichnet,**
**dass** wenigstens ein Triglycerid mit einem Schmelzpunkt von 30°C bis 70 °C enthalten ist.

3. Farbmine nach Anspruch 1 oder 2,
**dadurch gekennzeichnet,**
**dass** wenigstens ein Triglycerid gesättigter Fettsäuren enthalten ist.

4. Farbmine nach einem der Ansprüche 1 bis 3,
**gekennzeichnet durch**
wenigstens ein Triglycerid aus der Gruppe Palmöl-Triglyceride, Palmkernöl-Triglyceride, Capryl-Triglyceride, Caprin-Triglyceride, Capryl-/Caprin-Triglyceride.

5. Farbmine nach einem der Ansprüche 1 bis 4,
**dadurch gekennzeichnet,**
**dass** Natriumalginat und/oder Kaliumalginat als Bindemittel enthalten sind.

6. Farbmine nach einem der Ansprüche 1 bis 5
**dadurch gekennzeichnet,**
**dass** wenigstens ein anorganischer Füllstoffe enthalten ist.

7. Farbmine nach Anspruch 6,
**dadurch gekennzeichnet,**
**dass** Glimmer enthalten ist.

8. Farbmine nach Anspruch 7,
**gekennzeichnet durch**
einen Gehalt an Talkum und/oder Kaolin.

9. Farbmine nach einem der Ansprüche 1 bis 8
**dadurch gekennzeichnet,**
**dass** als Farbmittel Farbpigmente vorhanden sind.

## Claims

1. Erasable coloured lead which consists of 1% to 10% of an alginate as binder, 5% to 25% of at least one triglyceride of one or more fatty acids having 10 to 20 carbon atoms, and 30% to 90% fillers, 0.1% to 15% coloured pigments and 0% to 10% additives.

2. Coloured lead according to Claim 1,
**characterized in that**
at least one triglyceride with a melting point of from 30°C to 70°C is present.

3. Coloured lead according to Claim 1 or 2,
**characterized in that**
at least one triglyceride of saturated fatty acids is present.

4. Coloured lead according to one of Claims 1 to 3,
**characterized by**
at least one triglyceride from the group palm oil triglycerides, palm kernel oil triglycerides, caprylic triglycerides, capric triglycerides, caprylic/capric triglycerides.

5. Coloured lead according to one of Claims 1 to 4,
**characterized in that**
sodium alginate and/or potassium alginate are present as binders.

6. Coloured lead according to one of Claims 1 to 5
**characterized in that**
at least one inorganic filler is present.

7. Coloured lead according to Claim 6,
**characterized in that**
mica is present.

8. Coloured lead according to Claim 7,
**characterized by**
a content of talc and/or kaolin.

9. Coloured lead according to one of Claims 1 to 8
**characterized in that**
coloured pigments are present as colorant.

## Revendications

1. Mine de couleur effaçable qui est constituée de 1 % à 10 % d'alginate en tant que liant, de 5% à 25 % d'au moins un triglycéride d'un ou de plusieurs acides gras ayant de 10 à 20 atomes de carbone, ainsi que de 30 % à 90 % de charges, de 0,1 % à 15 % de pigments colorés et de 0 % à 10 % d'additifs.

2. Mine de couleur suivant la revendication 1,
**caractérisé**
**en ce qu'**il est contenu au moins un triglycéride ayant un point de fusion de 30°C à 70°C.

3. Mine de couleur suivant la revendication 1 ou 2,
**caractérisé**
**en ce qu**'il est contenu au moins un triglycéride d'acides gras saturés.

4. Mine de couleur suivant l'une des revendications 1 à 3,
**caractérisé**
**par** au moins un triglycéride choisi dans le groupe des triglycérides d'huile de palmiste, des triglycérides de capryle, des triglycérides de caprine, des triglycérides de capryle/caprine.

5. Mine de couleur suivant l'une des revendications 1 à 4,
**caractérisé**
**en ce qu'**il est contenu de l'alginate de sodium et/ou de l'alginate de potassium comme liant.

6. Mine de couleur suivant l'une des revendications 1 à 5,
**caractérisé**
**en ce qu'**il est contenu au moins une charge minérale.

7. Mine de couleur suivant la revendication 6,
**caractérisé**
**en ce qu'**il est contenu du mica.

8. Mine de couleur suivant la revendication 7,
**caractérisé**
**par** une teneur en talc et/ou en kaolin.

9. Mine de couleur suivant l'une des revendications 1 à 8,
**caractérisé**
**en ce que** des pigments colorés sont prévus comme colorant.
